Europäisches Patentamt

European Patent Office

Office européen des brevets

(19)

(11) Numéro de publication : **0 424 207 B1**

(12)

# FASCICULE DE BREVET EUROPEEN

(45) Date de publication du fascicule du brevet :
**30.12.92 Bulletin 92/53**

(51) Int. Cl.$^5$ : **G01B 5/20**

(21) Numéro de dépôt : **90402767.9**

(22) Date de dépôt : **05.10.90**

(54) **Appareil de lecture de contour, notamment pour monture de lunettes.**

(30) Priorité : **06.10.89 FR 8913079**

(43) Date de publication de la demande :
**24.04.91 Bulletin 91/17**

(45) Mention de la délivrance du brevet :
**30.12.92 Bulletin 92/53**

(84) Etats contractants désignés :
**BE DE ES GB IT**

(56) Documents cités :
**WO-A-88/08511**
**DE-A- 1 623 177**
**FR-A- 2 614 690**
**GB-A- 2 194 053**

(73) Titulaire : **ESSILOR INTERNATIONAL, Cie**
**Générale d'Optique**
**1 Rue Thomas Edison, Echat 902**
**F-94028 Créteil Cédex (FR)**

(72) Inventeur : **Daboudet, Pascal**
**28 Rue des Cordonniers**
**F-95570 Bouffemont (FR)**
Inventeur : **Gallardo, Manuel**
**4 Rue Albert Matar**
**F-77400 Carnetin (FR)**
Inventeur : **Haddadi, Ahmed**
**7/9 Rue Mireille**
**F-91600 Savigny-Sur-Orge (FR)**

(74) Mandataire : **CABINET BONNET-THIRION**
**95 Boulevard Beaumarchais**
**F-75003 Paris (FR)**

EP 0 424 207 B1

Jouve, 18, rue Saint-Denis, 75001 PARIS

## Description

La présente invention concerne d'une manière générale les appareils de lecture de contour propres à "lire" une quelconque forme, et elle vise plus particulièrement, mais non exclusivement, le cas où il s'agit de relever le contour spécifique des cercles ou entourages d'une quelconque monture de lunettes en vue de la taille des verres destinés à être montés dans ceux-ci.

Par exemple, mais également non exclusivement, la présente invention vise le cas où, procédant en coordonnées polaires, un tel appareil de lecture de contour comporte, d'une part, une table de soutien, qui est équipée de moyens de maintien propres à soutenir l'article dont le contour est à lire, et, d'autre part, un palpeur, qui, équipé d'une tête de contact pour son application contre un tel article, est porté par un chariot lui-même monté mobile en va-et-vient, suivant un trajet rectiligne, sur un support, avec des moyens de rotation propres à une rotation relative entre la table de soutien et ce support.

Un appareil de lecture de contour de ce type se trouve par exemple faire l'objet de la demande de brevet européen No 0.181.788.

Bien qu'il était proposé par ailleurs de la monter rotative, la tête de contact dont est équipé le palpeur est le plus souvent fixe.

C'est le cas, notamment, dans la demande de brevet européen No 0.181.788 mentionnée ci-dessus.

Quoi qu'il en soit, avec les appareils de lecture de contour du genre concerné connus à ce jour, il n'est pas rare d'observer des incidents de fonctionnement dus à un arc-boutement local du palpeur contre l'article dont le contour est à lire, notamment lorsque ce contour présente des angles très fermés, comme cela peut être le cas pour les cercles ou entourages de certaines montures de lunettes.

Le risque de tels incidents se trouve accentué si la pression de contact entre le palpeur et l'article en cause est alors importante, comme cela peut être le cas lorsque, comme prévu dans la demande de brevet européen No 0.181.788, cette pression de contact est due à un ressort dont la tension varie avec la longueur.

La présente invention a d'une manière générale pour objet des dispositions permettant d'éviter de manière très simple ces inconvénients.

De manière plus précise, elle a pour objet un appareil de lecture de contour, notamment pour monture de lunettes, du genre comportant, d'une part, une table de soutien, qui est équipée de moyens de maintien propres à soutenir l'article dont le contour est à lire, et, d'autre part, un palpeur, qui, pour son application contre ledit article, est équipé d'une tête de contact montée rotative, et qui est porté par un chariot lui-même monté mobile par rapport à ladite table de soutien, cet appareil de lecture de contour étant d'une manière générale caractérisé en ce que, suivant un premier aspect, la tête de contact du palpeur est calée en rotation sur des moyens d'entraînement en rotation.

Il s'agit en pratique d'un moteur, ou, plus précisément, d'un moto-réducteur, porté par le chariot.

Quoi qu'il en soit, l'expérience montre que, de manière assez surprenante, le contact de roulement qui s'établit alors entre le palpeur et l'article dont le contour est à lire suffit à éliminer tout risque d'arc-boutement entre eux.

Si désiré, et suivant un développement de l'invention, dans le cas où, s'agissant d'une lecture en coordonnées polaires, le chariot porteur du palpeur est monté mobile sur un support suivant un trajet rectiligne, avec des moyens de rotation propres à une rotation relative entre ce support et la table de soutien, il peut être tiré profit du moteur ainsi mis en oeuvre pour limiter à de simples moyens de roulement les moyens de rotation intervenant entre ce support et cette table de soutien.

L'expérience montre, en effet, que l'effet d'entraînement dû au contact de roulement entre la tête de contact du palpeur et l'article dont le contour est à lire suffit à assurer la rotation nécessaire entre la table de soutien et ce support.

Mais, si désiré, il peut aussi être prévu un moteur spécifique pour assurer cette rotation.

Si désiré, il peut également être tiré profit du moteur assurant l'entraînement en rotation de la tête du contact du moteur pour permettre, sous le contrôle d'un embrayage, un déplacement suivant son axe de ce palpeur.

La mise en contact de sa tête de contact avec l'article dont le contour est à lire s'en trouve avantageusement facilitée.

Suivant un deuxième aspect, l'appareil de lecture de contour suivant l'invention est encore caractérisé en ce que, le chariot porteur du palpeur étant en prise avec un guide solidaire de son support et portant, parallèlement à ce guide, au moins une crémaillère avec laquelle engrène un pignon, qui, monté rotatif sur ledit support, est calé en rotation sur l'arbre de sortie d'un moteur par l'intermédiaire d'une transmission, il est prévu, sur cette transmission, un limiteur de couple.

Il s'agit, par exemple, d'un simple embrayage magnétique.

Quoi qu'il en soit, il est possible, grâce à ce limiteur de couple, de limiter à la valeur désirée la pression de contact entre le palpeur et l'article dont le contour est à lire.

En outre, il suffit dès lors avantageusement d'inverser le sens d'alimentation du moteur concerné pour inverser le sens de mise en pression de l'article dont le contour est à lire, ce qui permet d'appliquer l'appareil de lecture de contour suivant l'invention aussi bien au cas où l'article dont le contour est à lire est l'un des cercles ou entourages d'une monture de lunettes qu'au cas où il s'agit d'un gabarit.

Les caractéristiques et avantages de l'invention ressortiront d'ailleurs de la description qui va suivre, à titre d'exemple, en référence aux dessins schématiques annexés sur lesquels :

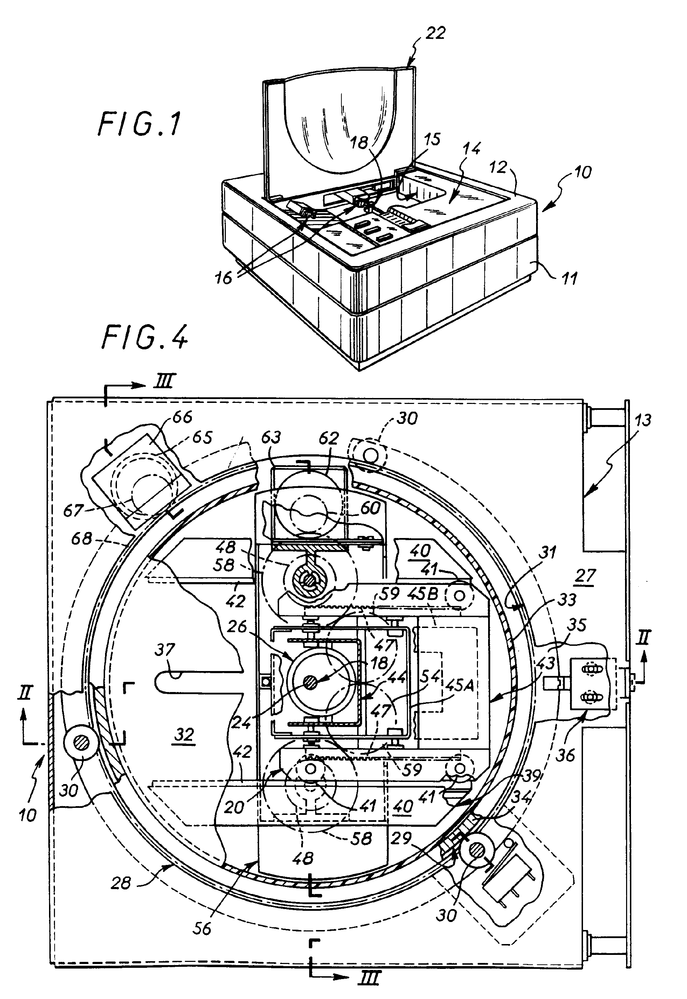

la figure 1 est une vue en perspective, capot d'accès levé, d'un appareil de lecture de contour suivant l'invention ;

la figure 2 en est, à échelle supérieure, une vue en coupe axiale, suivant, sensiblement, la ligne brisée II-II de la figure 4 ;

la figure 3 en est une autre vue en coupe axiale, suivant, sensiblement, la ligne brisée III-III de la figure 4 ;

la figure 4 en est, avec des arrachements, une vue de dessus, suivant, sensiblement, la flèche IV de la figure 2 ;

la figure 5 est, avec des arrachements locaux, une vue partielle en perspective d'une forme complémentaire de réalisation de l'appareil de lecture de contour suivant l'invention ;

la figure 6 en est une vue partielle en plan-coupe, suivant la ligne VI-VI de la figure 5, pour la position débrayée de l'embrayage que comporte cette forme de réalisation ;

la figure 7 est une vue partielle en plan-coupe analogue à celle de la figure 6, pour la position embrayée de cet embrayage.

Tel que représenté sur ces figures, l'appareil de lecture de contour suivant l'invention comporte, globalement, dans un habillage 10 formé d'un corps 11 et d'un couvercle 12, d'une part, outre un bâti 13 solidaire du corps 11 de l'habillage 10, une table de soutien 14, qui présente un évidement 15, et qui est équipée de moyens de maintien 16 propres à soutenir au-dessus de cet évidement 15 l'article dont le contour est à lire, et, d'autre part, un palpeur 18, qui, pour son application, à la faveur de l'évidement 15, contre cet article, est équipé d'une tête de contact 19, montée rotative, et qui est porté par un chariot 20 lui-même monté mobile par rapport à la table de soutien 14, et, plus précisément, monté mobile en va-et-vient, suivant un trajet rectiligne, sur un support 21, avec, tel que décrit plus en détail ultérieurement, s'agissant, à titre d'exemple, d'un appareil de lecture de contour intervenant en coordonnées polaires, des moyens de rotation propres à une rotation relative entre cette table de soutien 14 et ce support 21.

Un capot 22, monté pivotant sur le couvercle 12 de l'habillage 10, donne accès à l'évidement 15 de la table de soutien 14 dans lequel interviennent les moyens de maintien 16.

La table de soutien 14 ne relevant pas de la présente invention, elle ne sera pas décrite en détail ici.

Il suffira d'indiquer que, dans la forme de réalisation représentée, les moyens de maintien 16 dont elle est équipée sont du type de ceux décrits dans la demande de brevet français déposée le 21 Décembre 1988 sous le N° 88 16911.

D'une manière plus générale, l'appareil de lecture de contour suivant l'invention ne sera pas décrit dans tous ses détails ici.

Par mesure de simplicité, seuls en seront en effet décrits ici les éléments nécessaires à la compréhension de l'invention.

Suivant l'invention, la tête de contact 19 du palpeur 18 est calée en rotation sur des moyens d'entraînement en rotation.

En pratique, dans la forme de réalisation représentée, cette tête de contact 19 est solidaire d'un fût 24 calé en rotation sur l'arbre de sortie 25 d'un moteur, ou, plus précisément, d'un moto-réducteur 26, qui en constitue les moyens d'entraînement en rotation, et qui est porté par le chariot 20.

Dans la forme de réalisation représentée, la table de soutien 14, portée par une platine 27 du bâti 13 parallèle au fond du corps 11 de l'habillage 10, est fixe, tandis que le support 21 du chariot 20 est monté rotatif par rapport à ce bâti 13.

En pratique, ce support 21 comporte un plateau 28, de contour général circulaire, présentant, sur sa tranche, une gorge 29 par laquelle il est en prise avec au moins trois galets 30, qui, répartis le long de sa périphérie, par exemple à 120° deux à deux, sont montés rotatifs sur le bâti 13.

Par ces galets 30, le plateau 28, et donc le support 21 dans son ensemble, sont en quelque sorte suspendus au bâti 13, à la faveur d'un évidement 31, de contour circulaire, de la platine 27 de celui-ci entourant l'évidement 15 de la table de soutien 14.

Dans la forme de réalisation représentée, le plateau 28 comporte une partie centrale 32, qui, pour son allègement, notamment, est réalisée en matière synthétique, et à la surface inférieure de laquelle est suspendu, tel que décrit ci-après, le chariot 20 porteur du palpeur 18, et, entourant un rebord 33 de cette partie centrale 32 et formant jante, une partie périphérique 34, qui, pour plus de rigidité, est réalisée en métal, et sur laquelle est présente la gorge 29 avec laquelle sont en prise les galets 30.

En pratique, dans cette forme de réalisation, cette gorge 29 a, transversalement, un profil en trapèze, cependant que, de manière usuelle, les galets 30 ont, axialement, une section en rectangle.

Chacun des galets 30 ne porte donc qu'en deux points du plateau 28 dans cette forme de réalisation.

Quoi qu'il en soit, et ainsi qu'il est aisé de le comprendre, ces galets 30 constituent, conjointement avec la gorge 29 de ce plateau 28, des moyens de roulement intervenant entre la table de soutien 14 et le support 21 du chariot 20.

Du plateau 28 est en outre solidaire, dans la forme de réalisation représentée, une roue codée 35 propre, en coopération avec un capteur 36, à une lecture de sa position angulaire.

Par une boutonnière 37, allongée radialement, de la partie centrale 32 de ce plateau 28, le palpeur 24 fait saillie dans l'évidement 15 de la table de soutien 14.

Pour sa suspension au plateau 28, le chariot 20 porteur de ce palpeur 18 est en prise avec un guide 39 solidaire de la partie centrale 32 de celui-ci, et donc du support 21 auquel il appartient, à la surface inférieure de cette partie centrale 32.

Dans la forme de réalisation représentée, ce guide 39 comporte, parallèlement l'un à l'autre, deux rails 40, formés chacun d'une cornière à la faveur d'une rainure de laquelle est rapportée une barre de section circulaire 42, et le chariot 20, qui s'étend entre ces rails 40, est en prise avec ceux-ci par des galets rotatifs 41.

En pratique, dans la forme de réalisation représentée, le chariot 20 comporte, d'une part, une nacelle 43, qui porte les galets 41, et, d'autre part, dans cette nacelle 43, un piétement 44, qui porte le moto-réducteur 26, et donc, par celui-ci, le palpeur 18, avec, intervenant entre cette nacelle 43 et ce piétement 44, suivant des dispositions du type de celles décrites dans la demande de brevet français déposée le 28 Avril 1987 sous le N° 87 06021 et publiée sous le N° 2.614.690, deux embiellages 45A, 45B, parallèles entre eux, mais de longueurs différentes, et parallèles au guide 39, pour permettre au piétement 44 un mouvement transversal par rapport à ce guide 39 de nature à autoriser le palpeur 18 à suivre le ménisquage des cercles ou entourages d'une monture de lunettes lorsque l'article dont le contour est à lire est une telle monture de lunettes.

Les dispositions correspondantes ne relevant pas de la présente invention, elles ne seront pas décrites plus en détail ici.

Parallèlement au guide 39, le chariot 20 porte, pour son entraînement, au moins une crémaillère 47.

Dans la forme de réalisation représentée, il porte ainsi, symétriquement l'une par rapport à l'autre, de part et d'autre du palpeur 18, deux crémaillères 47, et celles-ci sont formées par des retours en équerre venus d'un seul tenant des flancs de sa nacelle 43.

Avec chacune de ces crémaillères 47 engrène un pignon 48, qui, monté rotatif sur le support 21, est calé en rotation sur l'arbre de sortie d'un moteur, et plus précisément d'un moto-réducteur 50, par l'intermédiaire d'une transmission 51 sur laquelle intervient un limiteur de couple 52.

En pratique, il y a ainsi, associé à chaque pignon 48, un limiteur de couple 52, et celui-ci est constitué par un embrayage magnétique comportant, d'une part, un aimant 53, calé en rotation sur un tel pignon 48, et, d'autre part, une armature 54, calée en rotation sur la transmission 51 correspondante.

Dans la forme de réalisation représentée, les pignons 48 sont chacun individuellement montés rotatifs dans une douille 55 solidaire d'un châssis 56, qui, commun à l'ensemble, appartient au support 21 et porte également la transmission 51.

En pratique, dans cette forme de réalisation, ce châssis 56 se présente sous la forme générale d'une goulotte s'étendant diamétralement par rapport au plateau 28, sous celui-ci, et, à chacune de ses extrémités, il est solidarisé à ce plateau 28 par des moyens, qui ne sont pas visibles sur les figures, et qui, connus en soi, ne seront pas décrits ici.

La transmission 51 s'étend sous le fond de ce châssis 56.

Elle comporte, dans la forme de réalisation représentée, outre deux pignons 58 chacun individuellement calés en rotation sur l'armature 54 du limiteur de couple 52 associé aux pignons 48 correspondants, deux pignons intermédiaires 59, qui engrènent chacun respectivement avec les pignons 58, et qui engrènent également entre eux.

Avec l'un des pignons 58 engrène, en outre, un pignon 60 calé sur l'arbre de sortie d'un moteur, ou, plus précisément, d'un moto-réducteur 62 porté par une équerre 63 solidaire du châssis 56, à l'extérieur de celui-ci.

Si désiré, les moyens de rotation entre la table de soutien 14 et le support 21 du chariot 20 peuvent se réduire aux moyens de roulement que constituent les galets 30 et la gorge 29 du plateau 28.

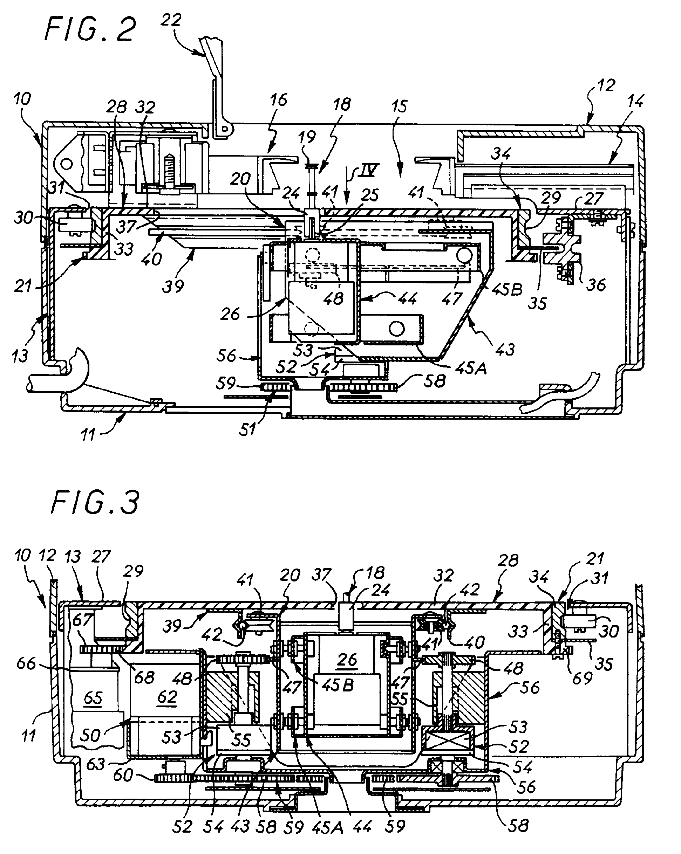

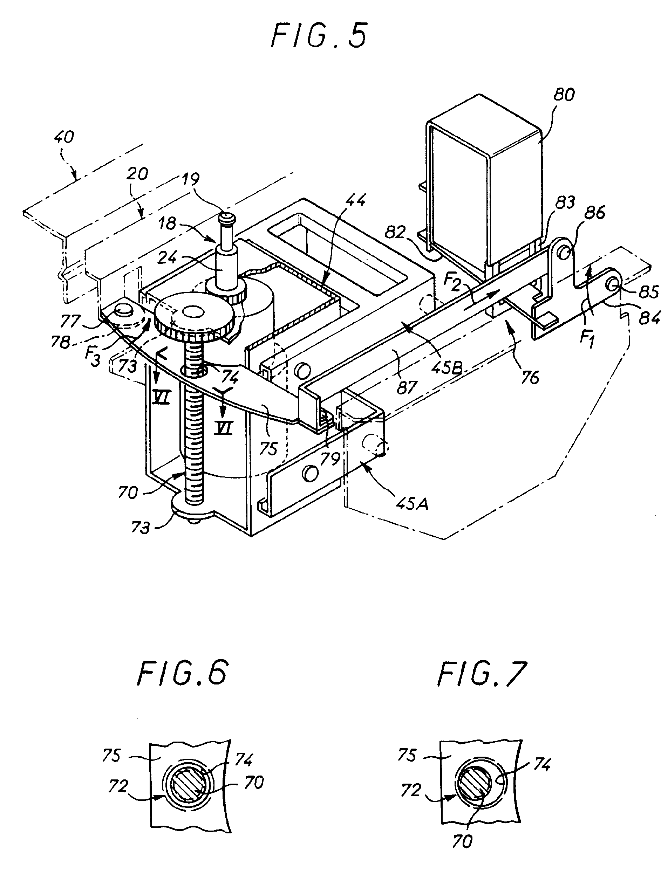

Dans la forme de réalisation représentée, cependant, ces moyens de rotation comportent, outre ces moyens de roulement, un moteur, ou, plus précisément, un moto-réducteur 65, figures 3 et 4.

Dans la forme de réalisation représentée, ce moto-réducteur 65 est porté par une équerre 66 solidaire du bâti 13, et, sur son arbre de sortie, est calé en rotation un pignon 67 qui engrène avec une crémaillère 68 prévue à cet effet sur le plateau 28, à la périphérie de celui-ci.

En pratique, cette crémaillère 68 est formée sur la tranche d'un retour en équerre 69 du rebord 33 de la partie centrale 32 de ce plateau 28, et, pour son maintien, la roue codée 35 se trouve pincée entre ce retour en équerre 69 et la partie périphérique 34, formant jante, de ce plateau 28.

En service, le palpeur 18 est amené au contact, par sa tête de contact 19, et sous le contrôle du moto-réducteur 62 auquel est asservi le chariot 20 qui le porte, de l'article dont le contour est à lire, dûment soutenu par les moyens de maintien 16 équipant la table de soutien 14.

Le moto-réducteur 26 assurant l'entraînement du palpeur 18, et donc de sa tête de contact 19, est alors mis en route.

Du fait de la motorisation qui est alors ainsi la sienne, et de la pression suivant laquelle il s'applique à l'article dont le contour est à lire, dûment contrôlée par les limiteurs de couple 52, le palpeur 18 parcourt alors, par sa tête de contact 19, le contour de cet article, pourvu, bien entendu, ce qui est usuellement le cas, que le coefficient de frottement entre lui et ce dernier soit suffisant.

Comme indiqué précédemment, le moto-réducteur 26 peut en outre suffire pour assurer, conjointement, par lui-même, la rotation du plateau 28.

Mais, dans la forme de réalisation représentée, le moto-réducteur 65 est mis en oeuvre à cet effet.

En pratique, la vitesse de rotation de la tête de contact 19 du palpeur 18 n'a pas de valeur critique.

Mais, de préférence, elle est faite supérieure à celle du plateau 28.

Cette dernière est par exemple de l'ordre de 5 à 10 t/mn.

Bien entendu, cette valeur numérique n'est donnée ici qu'à titre indicatif, sans limitation de l'invention.

Quoi qu'il en soit, et comme également indiqué précédemment, le capteur 36 assure alors le relevé de la position angulaire du support 21.

Conjointement, il est assuré un relevé de la position linéaire du chariot 20 le long de son guide 39, à l'aide par exemple d'une règle électronique.

Ainsi, les coordonnées polaires du palpeur 18 sont connues à tout instant.

Corollairement, la pression suivant laquelle la tête de contact 19 de ce palpeur 18 se trouve appliquée à l'article dont le contour est à lire se trouve avantageusement contrôlée par les limiteurs de couple 52 intervenant sur la commande du chariot 20.

Dès que cette pression de contact dépasse une valeur déterminée, de l'ordre de 60 gr par exemple, l'un et/ou l'autre de ces limiteurs de couple 52 patinent, ce qui maintient à cette valeur cette pression de contact.

Dans ce qui précède, il a été supposé que, à la mise en service, la tête de contact 19 du palpeur 18 était amenée à la main au niveau de l'article dont le contour est à lire, en entraînant alors avec elle l'ensemble formé par le moto-réducteur 26 et le piétement 44 portant celui-ci.

Dans la forme complémentaire de réalisation représentée sur les figures 5 et 6, il est tiré profit du moto-réducteur 26 pour assurer un déplacement axial commandé du palpeur 18, et, par là, faciliter son accostage de l'article dont le contour est à lire.

Pour ce faire, il est prévu, entre le palpeur 18 et le chariot 20 qui le porte, une vis 70 propre à assurer un déplacement axial de ce palpeur 18 par rapport à ce chariot 20, et, sous le contrôle d'un embrayage 72, détaillé ci-après, cette vis 70 est susceptible d'être calée en rotation sur les moyens d'entraînement en rotation sur lesquels est calée en rotation la tête de contact 19 de ce palpeur 18.

En pratique, dans la forme de réalisation représentée, la vis 70 s'étend parallèlement au fût 24 du palpeur 18, en étant montée rotative sur des pattes 73 solidaires du moto-réducteur 26 constituant ces moyens d'entraînement en rotation.

Par exemple, et tel que représenté, ces pattes 73, qui sont au nombre de deux, sont solidaires du piétement 44 portant le moto-réducteur 26, en venant d'un seul tenant de celui-ci.

Elles s'étendent parallèlement l'une à l'autre, à distance l'une de l'autre.

Entre ces pattes 73, la vis 70 traverse avec jeu un écrou 74 solidaire d'un levier 75, qui, sous le contrôle d'une commande 76, détaillée ci-après, à la disposition de l'usager, est monté pivotant sur le chariot 20, autour d'un axe parallèle à la vis 70, et qui forme ainsi l'embrayage 72.

Par exemple, et tel que représenté, l'écrou 74 est formé par la tranche même, dûment taraudée à cet effet, du levier 75, et, à l'une de ses extrémités, celui-ci est articulé par un pivot 77 sur une patte 78 solidaire du chariot 20, en venant d'un seul tenant de celui-ci.

A son autre extrémité, le levier 75 est articulé par un pivot 79 à la commande 76.

Dans la forme de réalisation représentée, cette commande 76 comporte un électro-aimant 80, sur le circuit d'excitation duquel est interposé un bouton poussoir, non représenté, à la disposition de l'usager, et dont l'armature 82, dûment guidée par un étrier 83 qu'elle traverse, est en prise avec un renvoi d'angle 84, qui, par un pivot 85, est articulé au chariot 20, et qui, par un autre pivot 86 parallèle au précédent, est articulé à une tringle 87 à laquelle, par le pivot 79, est articulé le levier 75.

Conjointement, la vis 70 porte, au-delà du levier 75, un pignon 89 par lequel elle engrène avec un pignon 90 solidaire du fût 24 du palpeur 18.

Au repos, c'est-à-dire lorsque l'électro-aimant 80 n'est pas excité, l'écrou 74 est, en chacun de ses points, à distance de la vis 70, figures 5 et 6.

Autrement dit, l'embrayage 72 qu'il forme avec la vis 70 est alors en position débrayée.

La vis 70 tourne alors à vide, en synchronisme avec le palpeur 18.

Lorsque, au contraire, l'électro-aimant 80 est excité, son armature 82 provoque une rotation, autour de son pivot fixe 85, du renvoi d'angle 84, suivant la flèche F1 de la figure 5, et celui-ci exerce en conséquence, sur la tringle 87, suivant la flèche F2, une traction dont il résulte le pivotement du levier 75 autour de son pivot fixe 77, et donc l'application de l'écrou 74 qu'il porte sur la vis 70, en un point de celle-ci, figure 7.

L'embrayage 72 correspondant est alors en position embrayée.

La vis 70 étant calée axialement sur le chariot 20, il en résulte un déplacement axial de l'écrou 74 le long de cette vis 70, et, donc, un déplacement, suivant l'axe du palpeur 18, du piétement 44, et, partant, du moto-réducteur 26 et du palpeur 18, vis-à-vis de ce chariot 20.

L'ensemble mobile dont est solidaire le palpeur 18 peut ainsi monter ou descendre, sous le contrôle des deux embiellages 45A, 45B.

Bien entendu, la présente invention ne se limite pas à la forme de réalisation décrite et représentée, mais englobe toute variante d'exécution et/ou de mise en oeuvre.

En particulier, au lieu que la table de soutien sur laquelle est monté l'article dont le contour est à lire soit fixe, cette table de soutien pourrait être montée rotative, le support portant le chariot porteur du palpeur étant alors, lui, fixe.

En outre, au lieu d'être une monture de lunettes, et, plus précisément, l'un ou l'autre des cercles ou entourages que comporte une telle monture de lunettes pour la mise en place de verres, l'article dont le contour est à lire peut tout aussi bien être par exemple un gabarit représentatif d'un cercle ou entourage.

Le palpeur portant alors évidemment sur l'extérieur d'un tel gabarit, et non plus sur l'intérieur d'un cercle ou entourage, la rotation relative entre la table de soutien et le support du chariot portant ce palpeur se fait dans le sens inverse du précédent.

Enfin, au lieu d'intervenir en coordonnées polaires, l'appareil de lecture de contour suivant l'invention peut tout aussi bien intervenir en coordonnées cartésiennes.

**Revendications**

1. Appareil de lecture de contour, notamment pour monture de lunettes, du genre comportant, d'une part, une table de soutien (14), qui est équipée de moyens de maintien (16) propres à soutenir l'article dont le contour est à lire, et, d'autre part, un palpeur (18), qui, pour son application contre ledit article, est équipé d'une tête de contact (19) montée rotative, et qui est porté par un chariot (20) luimême monté mobile par rapport à ladite table de soutien (14), caractérisé en ce que la tête de contact (19) du palpeur (18) est calée en rotation sur des moyens d'entraînement en rotation.

2. Appareil de lecture de contour suivant la revendication 1, caractérisé en ce que la tête de contact (19) du palpeur (18) est solidaire d'un fût (24) calé en rotation sur l'arbre de sortie d'un moteur (26) porté par le chariot (20).

3. Appareil de lecture de contour suivant l'une quelconque des revendications 1, 2, caractérisé en ce que, le chariot (20) porteur du palpeur (18) étant monté mobile en va-et-vient, suivant un trajet rectiligne, sur un support (21), avec des moyens de rotation propres à une rotation relative entre la table de soutien (14) et ce chariot (20), ladite table de soutien (14), solidaire d'un bâti (13), est fixe, tandis que ledit support (21) est monté rotatif par rapport audit bâti (13).

4. Appareil de lecture de contour suivant la revendication 3, caractérisé en ce que le support (21) du chariot (20) porteur du palpeur (18) comporte un plateau de contour général circulaire (28) présentant sur sa tranche une gorge (29) par laquelle il est en prise avec au moins trois galets (30), qui, répartis le long de sa périphérie, sont montés rotatifs sur le bâti (13).

5. Appareil de lecture de contour suivant la revendication 4, caractérisé en ce que ledit plateau (28) comporte une partie centrale (32), qui est réalisée en matière synthétique, et à laquelle est suspendu le chariot (20) porteur du palpeur (18), et une partie périphérique (34), formant jante, qui est réalisée en métal, et sur laquelle est présente la gorge (29) par laquelle il est en prise avec des galets (30).

6. Appareil de lecture de contour suivant l'une quelconque des revendications 4, 5, caractérisé en ce que ladite gorge (29) a un profil en trapèze.

7. Appareil de lecture de contour suivant l'une quelconque des revendications 1 à 6, caractérisé en ce que le chariot (20) porteur du palpeur (18) est en prise avec un guide (39) et, parallèlement à ce guide (39), il porte au moins une crémaillère (47) avec laquelle engrène un pignon (48), qui, monté rotatif sur ledit support (21), est calé en rotation sur l'arbre de sortie d'un moteur (62) par l'intermédiaire d'une transmission (51) sur laquelle intervient au moins un limiteur de couple (52).

8. Appareil de lecture de contour suivant la revendication 7, caractérisé en ce que le limiteur de couple (52) est constitué par un embrayage magnétique.

9. Appareil de lecture de contour suivant l'une quelconque des revendications 7, 8, caractérisé en ce que le chariot (20) porteur du palpeur (18) porte, symétriquement l'une par rapport à l'autre de part et d'autre du palpeur (18), deux crémaillères (47).

10. Appareil de lecture de contour suivant la revendication 3, caractérisé en ce que les moyens de rotation entre la table de soutien (14) et le support (21) du chariot (20) porteur du palpeur (18) se réduisent à des moyens de roulement (29, 30).

11. Appareil de lecture de contour suivant la revendication 3, caractérisé en ce que les moyens de rotation entre la table de soutien (14) et le support (21) du chariot (20) porteur du palpeur (18) comportent, outre des moyens de roulement (29, 30), un moteur (65).

12. Appareil de lecture de contour suivant l'une quelconque des revendications 1 à 11, caractérisé en ce qu'il est prévu, entre le palpeur (18) et le chariot (20) qui le porte, une vis (70) propre à assurer un déplacement axial de ce palpeur (18) par rapport à ce chariot (20), et, sous le contrôle d'un embrayage (72), cette vis (70) est susceptible d'être calée en rotation sur les moyens d'entraînement en rotation sur lesquels est calée en rotation la tête de contact (19) dudit palpeur (18).

13. Appareil de lecture de contour suivant les revendications 2 et 12, prises conjointement, caractérisé en ce que la vis (70) s'étend parallèlement au fût (24) du palpeur (18), en étant montée rotative sur des pattes (73) solidaires du moteur (26) constituant les moyens d'entraînement en rotation de la tête de contact (19) de celui-ci, et elle traverse avec jeu un écrou (74) solidaire d'un levier (75), qui, sous le contrôle d'une commande (76) à la disposition de l'usager, est monté pivotant sur le chariot (20) autour d'un axe parallèle à la vis (70), et qui forme ainsi l'embrayage (72).

14. Appareil de lecture de contour suivant la revendication 13, caractérisé en ce que ledit écrou (74) est formé par la tranche dudit levier (75).

**Patentansprüche**

1. Kontur-Lesevorrichtung, insbesondere zur Befestigung von Augengläsern, von der Art, die einerseits einen Unterstützungstisch (14) aufweist, der mit Haltemitteln (16) versehen ist, die geeignet sind, den Gegenstand zu halten, dessen Kontur zu lesen ist, und andererseits einen Taster (18), der zur Anwendung gegen den Gegenstand mit einem drehbar gelagerten Kontaktkopf (19) versehen ist, und der durch einen Wagen (20) getragen ist, der selbst bezüglich des Unterstützungstisches (14) beweglich angebracht ist, **dadurch gekennzeichnet, daß der Kontaktkopf (19) des Tasters (18) in Rotation festgekeilt ist auf Drehantriebsmitteln.**

2. Kontur-Lesevorrichtung nach Anspruch 1, **dadurch gekennzeichnet, daß der Kontaktkopf (19) des Tasters (18) einstückig ausgebildet ist mit einem Schaft (24), der in Rotation festgekeilt ist auf der Ausgangswelle eines Motors (26), der durch den Wagen (20) getragen ist.**

3. Kontur-Lesevorrichtung nach einem der Ansprüche 1, 2, **dadurch gekennzeichnet, daß der Wagen (20), der den Taster (18) trägt, hin- und hergehend angebracht ist, und zwar in einer geradlinigen Bahn, auf einem Träger (21), und zwar mit Drehmitteln, die geeignet sind zu einer relativen Drehung zwischen dem Unterstützungstisch (14) und dem Wagen (20), wobei der Unterstützungstisch (14), der einstückig mit einem Gestell (13) ist, fixiert ist, während der Träger (21) drehbar bezüglich des Gestells (13) angebracht ist.**

4. Kontur-Lesevorrichtung nach Anspruch 3, **dadurch gekennzeichnet, daß der Träger (21) des Wagens (20), der den Taster (18) trägt, eine Fläche von allgemein kreisförmiger Kontur (28) aufweist, die im Schnitt bzw. Rand eine Kehle (29) aufweist, durch die er im Eingriff ist mit wenigstens drei Rollen (30), die verteilt entlang seines Randes drehbar auf dem Gestell (13) gelagert sind.**

5. Kontur-Lesevorrichtung nach Anspruch 4, **dadurch gekennzeichnet, daß die Fläche (28) einen Mittelteil (32) aufweist, der aus synthetischem Material gemacht ist, und an dem der Wagen (20), der den Taster (18) trägt aufgehängt ist, und einen Randteil (34), der eine Felge bildet, die aus Metall gemacht ist, und auf der die Kehle (29) sich befindet, durch die er im Eingriff ist mit den Rollen (30).**

6. Kontur-Lesevorrichtung nach einem der Ansprüche 4, 5, **dadurch gekennzeichnet, daß die Kehle (29) ein trapezförmiges Profil hat.**

7. Kontur-Lesevorrichtung nach einem der Ansprüche 1 bis 6, **dadurch gekennzeichnet, daß der Wagen (20), der den Taster (18) trägt, im Eingriff ist mit einer Führung (39) und parallel zu der Führung (39) wenigstens eine Zahnstange (47) trägt, mit der ein Ritzel (48) kämmt, das beweglich gelagert auf dem Träger (21) in Rotation auf der Ausgangswelle eines Motors (62) festgekeilt ist, und zwar vermittels eines Getriebes (51), auf dem wenigstens ein Drehmomentbegrenzer (52) angeordnet ist.**

8. Kontur-Lesevorrichtung nach Anspruch 7, **dadurch gekennzeichnet, daß der Drehmomentbegrenzer (52) durch eine magnetische Kupplung gebildet ist.**

9. Kontur-Lesevorrichtung nach einem der Ansprüche 7, 8, **dadurch gekennzeichnet, daß der Wagen (20) der den Taster (18) trägt, symmetrisch zueinander auf beiden Seiten des Tasters (18) zwei Zahnstangen (47) trägt.**

10. Kontur-Lesevorrichtung nach Anspruch 3, **dadurch gekennzeichnet, daß die Drehmittel zwischen dem Unterstützungstisch (14) und dem Träger (21) des Wagens (20), der den Taster (18) trägt, auf zwei Rollmittel (29, 30) zurückgeführt sind.

11. Kontur-Lesevorrichtung nach Anspruch 3, dadurch gekennzeichnet, daß die Drehmittel zwischen dem Unterstützungstisch (14) und dem Träger (21) des Wagens (20), der den Taster (18) trägt, außer den Rollmitteln (29, 30) einen Motor (65) aufweisen.

12. Kontur-Lesevorrichtung nach einem der Ansprüche 1 bis 11, dadurch gekennzeichnet, daß zwischen dem Taster (18) und dem Wagen (20), der ihn trägt, eine Schraube (70) vorgesehen ist, die geeignet ist, eine axiale Verschiebung des Tasters (18) bezüglich des Wagens (20) zu gewährleisten, wobei unter der Steuerung einer Kupplung (72) die Schraube (70) in der Lage ist, in Rotation auf Drehantriebsmittel festgekeilt zu werden, auf denen in Rotation der Kontaktkopf (19) des Tasters (18) festgekeilt ist.

13. Kontur-Lesevorrichtung nach den Ansprüchen 2 und 12, zusammengenommen, dadurch gekennzeichnet, daß die Schraube (70) sich parallel zum Schaft (24) des Tasters (18) erstreckt, und zwar indem sie drehbar auf Klauen (73) angebracht ist, die einstückig mit dem Motor (26) ausgebildet sind, der die Drehantriebsmittel des Kontaktkopfes (19) dessen bildet, und mit Spiel eine Schraube (74) durchsetzt, die einstückig mit einem Hebel (75) ausgebildet ist, der unter der Befehlssteuerung (76) zur Handhabung des Benutzers schwenkbar um eine zur Schraube (70) parallele Achse an dem Wagen (20) angelenkt ist, und die somit die Kupplung (72) bildet.

14. Kontur-Lesevorrichtung nach Anspruch 13, dadurch gekennzeichnet, daß die Schraube (74) durch den Schnitt bzw. den Rand der Hebels (75) gebildet ist.

## Claims

1. A contour reading device, in particular for spectacle frames, of the kind comprising, on the one hand, a support table (14) which is provided with holding means (16) for supporting the article whose contour is to be read and, on the other hand, a feeler (18) which, in order to be applied against said article, is provided with a rotatably mounted contact head (19) and which is carried by a carriage (20) which itself is mounted movably with respect to said support table (14), characterised in that the contact head (19) of the feeler (18) is non-rotatably fixed on rotary drive means.

2. A contour reading device according to claim 1 characterised in that the contact head (19) of the feeler (18) is fixed with respect to a shaft (24) which is non-rotatably fixed on the output shaft of a motor (26) carried by the carriage (20).

3. A contour reading device according to either one of claims 1 and 2 characterised in that, the carriage (20) carrying the feeler (18) being mounted reciprocatingly along a rectilinear path on a support (21) with rotary means for relative rotation between the support table (14) and the carriage (20), said support table (14) which is fixed with respect to a frame (13) is fixed while said support (21) is mounted rotatably with respect to said frame (13).

4. A contour reading device according to claim 3 characterised in that the support (21) for the carriage (20) carrying the feeler (18) comprises a plate (28) of general circular contour which on its edge has a groove (29) by means of which it is engaged with at least three rollers (30) which, distributed around its periphery, are mounted rotatably on the frame (13).

5. A contour reading device according to claim 4 characterised in that said plate (28) comprises a central part (32) which is made of synthetic material and from which the carriage (20) carrying the feeler (18) is suspended, and a peripheral part (34) forming a rim which is made of metal and on which there is a groove (29) by way of which it is engaged with rollers (30).

6. A contour reading device according to either one of claims 4 and 5 characterised in that said groove (29) is of a trapezoidal configuration.

7. A contour reading device according to any one of claims 1 to 6 characterised in that the carriage (20) carrying the feeler (18) is engaged with a guide (39) and, parallel to said guide (39), it carries at least one rack (47) with which there meshes a pinion (48) which, mounted rotatably on said support (21), is non-rotatably fixed on the output shaft of a motor (62) by way of a transmission (51) which includes at least one torque limiter (52).

8. A contour reading device according to claim 7 characterised in that the torque limiter (52) is formed by a magnetic clutch.

9. A contour reading device according to either one of claims 7 and 8 characterised in that the carriage (20) carrying the feeler (18) carries two racks (47) disposed symmetrically relative to each other on respective sides of the feeler (18).

10. A contour reading device according to claim 3 characterised in that the rotary means between the support table (14) and the support (21) for the carriage (20) carrying the feeler (18) are reduced to rolling means (29, 30).

11. A contour reading device according to claim 3 characterised in that the rotary means between the support table (14) and the support (21) for the carriage (20) carrying the feeler (18) comprise a motor (65) in addition to rolling means (29, 30).

12. A contour reading device according to any one of claims 1 to 11 characterised in that provided between the feeler (18) and the carriage (20) which carries same is a screw (70) capable of producing axial displacement of said feeler (18) with respect to said carriage (20) and, under the control of a clutch (72), said screw (70) is capable of being non-rotatably fixed on the rotary drive means on which the contact head (19) of said feeler (18) is non-rotatably fixed.

13. A contour reading device according to claims 2 and 12 in combination characterised in that the screw (70) extends parallel to the shaft (24) of the feeler (18), being mounted rotatably on lugs (73) which are fixed with respect to the motor (26) constituting the rotary drive means for the contact head (19) thereof, and it passes with play through a nut (74) which is fixed with respect to a lever (75) which, under the control of a control member (76) accessible to the user, is mounted pivotably on the carriage (20) about an axis parallel to the screw (70) and which thus forms the clutch (72).

14. A contour reading device according to claim 13 characterised in that said nut (76) is formed by the edge of said lever (75).

FIG.1

FIG.4

## FIG.2

## FIG.3

# FIG.5

# FIG.6

# FIG.7